# EUROPEAN PATENT APPLICATION

(11) **EP 2 592 589 A1**
(43) Date of publication of application: **15.05.2013**
(21) Application number: 11306470.3
(22) Date of filing: 10.11.2011
(51) Int. Cl.: G06Q 20/32, G06F 21/00

(54) **Method and sytem for providing temporary banking card data**

(71) Applicant: Gemalto SA, 92190 Meudon (FR)
(72) Inventor: Caro, Eric, 13705 La Ciotat (FR); Karlisch, Thierry, 13600 La Ciotat (FR)

(57) **Abstract**

The invention relates to a method 20 for providing temporary banking card data. A portable device 12 includes a display screen and includes or is connected to wireless communication means.

According to the invention, the method comprises the following steps. The device sends, through a long range radiofrequency link, to a remote server 18 a device identifier 22 and data 214. The server verifies whether received data includes expected device authentication data. If the received data is expected device authentication data, then the server generates temporary banking card data and the server sends to the device the temporary banking card data 220.

The invention also relates to a corresponding system.

## Description

### Field of the invention:

The invention relates, in a general manner, to a method for providing temporary banking card data.

Moreover, the invention also pertains to a system for providing temporary banking card data.

### State of the art:

A known solution for providing an electronic card (or ecard) number, as temporary banking card data, is based upon a use of a Personal Computer (or PC) that is connected over Internet to a remote (web) server. Firstly, a PC user logins to the server by entering a login and a password associated with a user banking account. The PC user may select or type her/his user banking account number. Then, the PC user types a maximum transaction amount that she/he authorizes to spend and selects a currency type, like euro or US dollar. Once all the information has been submitted to and verified by the server, the server generates an ecard number. The server sends this latter to the PC accompanied with an expiration date and a three digit number, as trigram.

However, such a known solution is not secure since the used PC may be equipped with a malicious application that retrieves the ecard number and other related data. Thus, the (user) banking account number may be used by a thief who is not the owner of the user banking account.

There is therefore a need to access, in a more secure manner, temporary banking card data.

### Summary of the invention:

The invention proposes a solution for satisfying the just herein above specified need by furnishing a method for providing temporary banking card data.

According to the invention, a portable device including a display screen and including or being connected to wireless communication means, the method comprises the following steps. The device sends, through a long range radiofrequency link, to a remote server a device identifier and data. The server verifies whether received data includes expected device authentication data. If the received data is expected device authentication data, then the server generates temporary banking card data. And the server sends to the device the temporary banking card data.

The principle of the invention consists in submitting, in a wireless manner, from a portable device to a distant server identification and authentication data and, when the server authenticates effectively the device, issuing to the device temporary banking card data.

It is to be noted that there is no need of submitting a banking account number reducing thus possibly the risk of its typing erroneously and particularly the risk of its use by a thief and/or a malicious application.

Contrary to the herein above described known solution, thanks to the authentication of the requesting device, the invention allows issuing temporary banking card data in a more secure manner with respect to the known solution.

Thus, the invention solution makes it possible to trust the portable device which emits implicitly or explicitly a request of temporary banking card data while submitting its authentication data.

Furthermore, the invention solution does not require a user intervention, so as to access temporary banking card data by submitting automatically device identification and authentication data.

Preferably, the server accessing a memory storing a banking account number associated with the device identifier, the server identifies the banking account number. The transmission of the device identifier allows avoiding a transmission of a banking account number to the server. The server deduces the banking account number thanks to its registration in association with the device identifier at the server side.

According to a further aspect, the invention is a system for providing temporary banking card data.

According to the invention, the system comprises a portable device and a remote server, the portable device including a display screen and including or being connected to wireless communication means. The device is adapted to send, through a long range radiofrequency link, to the server, a device identifier and data. And the server is adapted to verify whether received data includes expected device authentication data, generate temporary banking card data if the received data is expected device authentication data and send to the device the temporary banking card data.

As portable device, it may be a mobile (tele)phone, a Personal Digital Assistant (or PDA), a palm-top computer, a laptop computer, a portable TeleVision (or TV), a netbook, a tablet computer, a game console, a portable PC or any other portable terminal equipped with at least a display screen.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates a simplified diagram of one exemplary embodiment of a system including a mobile phone, as portable device, and a remote server, the device being adapted to supply the server with device identification and authentication data to be provided with temporary banking card data, according to the invention; and
- Figure 2 represents a simplified message flow of one exemplary embodiment of a method implemented notably by the device and the server of figure 1, so that the device user accesses temporary banking card data issued by the server.

### Detailed description:

Herein under is considered a case in which the invention method for providing temporary banking card data is implemented by, on the one hand, a mobile phone, as portable device, in cooperation with a smart card, as token, and, on the other hand, a distant server.

The token is a smart object that is intended to communicate with the outside world. The token is any electronic medium that may have different form factors.

However, the invention method for providing temporary banking card data may be implemented by a user terminal that is preferentially dedicated to outputting temporary banking card data to the user. In other words, the terminal does not cooperate with any token, so as to receive temporary banking card data. According to such an embodiment (not represented), the terminal is adapted to carry out the functions carried out by the smart card and the terminal and that are described infra.

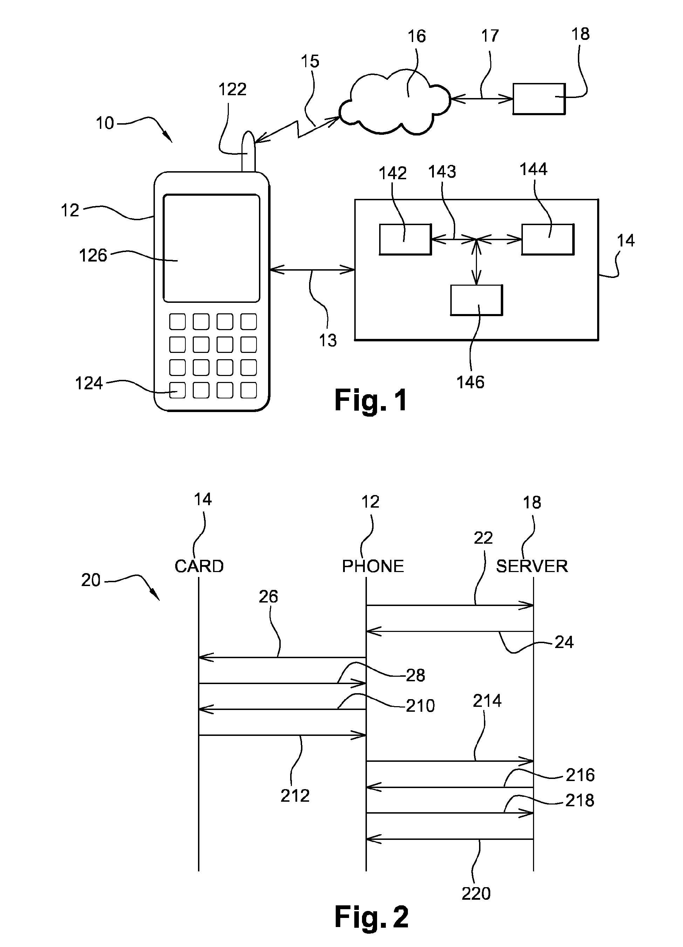

Figure 1 shows a system 10 for providing temporary banking card data.

The system 10 comprises a mobile phone 12, as portable device and user terminal, a banking smart card 14, as token, and a remote server 18.

For the sake of clarity and conciseness, the mobile phone 12 and the banking smart card 14 are termed hereinafter the phone 12 and the card 14 respectively.

The temporary banking card data may be used by the phone 12 (and preferably the card 14) user for buying on-line one or several product(s) and/or service(s) from one or several (web) server(s) while using preferably another user terminal(s), such as a PC(s) connected to an Internet network.

As to the terminal, it may be any device including means for processing data, comprising or being connected to wireless communication means containing an antenna for sending to and/or receiving data from outside, comprising or being connected to means for interfacing with a user, as Man Machine Interface (or MMI), like a keyboard, a loudspeaker (not represented) and/or a display screen, and comprising or being connected to means (not represented) for storing data.

Within the present description, the adjective "wireless" used within the expression "wireless communicating means" signifies notably that the communicating means communicates via one or several long range radio-frequency links that may be more or less long.

The long range radio-frequency(ies) may be fixed at several hundreds of MHz, for instance, around 850, 900, 1800 and/or 1900 MHz, as long range radio-frequency(ies).

Instead of an ubiquitous terminal like the phone, the portable device may be a specific terminal dedicated to obtaining temporary banking card data.

Such a dedicated terminal belongs preferably to the terminal user who wishes to get temporary banking card data associated with her/his banking account number.

The temporary banking card data is thus to be associated with a banking account number of a user. A particular banking account number is preferably identified by the server 18 without being sent to this latter, so as to avoid to send such sensitive information.

Alternately, the phone 12 retrieves a banking account number by either reading a memory of the phone 12, the card 14 or another entity (not represented) connected to the phone 12, and sends to the server 18 the retrieved banking account number.

According to another alternative, the phone 12 is able to request, through the phone MMI, from the phone user a banking account number.

The phone 12 comprises preferably a wireless antenna 122, a keyboard 124, a display screen 126 and one or several card readers (not represented).

Alternatively, instead of a separate keyboard, the display screen integrates a touch sensitive keyboard.

The phone 12 includes preferably at least one microprocessor (not represented), at least one memory (not represented) and at least one Input/Output (or I/O) interface.

The phone memory stores data.

As data, it may contain:
- a bank account number(s) relating to the phone user(s);
- an International Mobile Equipment Identity (or IMEI) or the like, as phone identifier,
- a generated password or One Time Password (or OTP), as phone authentication data;
- a Uniform Resource Identifier (or URI) or a Uniform Resource Locator (or URL) of the server 18 to be addressed;
- an Internet Protocol (or IP) address of the server 18 to be addressed; and/or
- at least one application.

As application(s) supported by the phone 12, there is preferably at least a Web browser, so as to access the server 18.

As application(s) supported by the phone 12, there is a first target application allowing the phone 12 to send to the server 18 data including a phone identifier and corresponding device authentication data. Thus, the phone 12, when authenticated, is allowed by the server 18 to receive temporary banking card data if there is no other condition to be satisfied at the server side. Otherwise, the phone 12 is forbidden by the server 18 to receive any temporary banking card data.

As application(s) supported by the phone 12, there may be an application for generating an OTP, like an applet termed Europay Mastercard Visa (or EMV) Chip Authentication Program (or CAP). Such an application allows issuing an OTP, so as to authenticate only once the phone 12 that supports and executes this application.

The phone memory stores preferably a private key and a corresponding public key. The public key may be used, by the server 18, for encrypting data to be sent to the phone 12, so as to protect data thus transmitted in an encrypted manner.

The phone memory stores preferably a public key relating to the server 18. The phone 12 may use the server public key for encrypting data to be sent to the server 18.

Alternately, the phone memory stores a symmetric key shared with the server 18 to be used for encrypting data to be sent to the server 18 and also decrypting data received from the server 18.

The phone memory may also store user data, like a User IDentifier (or UID) and/or a user password that allow identifying and authenticating a user of the phone 12 before a remote server. The user data may be arranged within one or several files stored within the phone memory.

If there is information that is not stored within the phone 12 and/or the card 14 and requested by the server 18, then the first target application allows requesting, through the phone 12 MMI, the lacking information, such as transaction data to be associated with the use of temporary banking card data to be received.

As transaction data, it may be, among others, a validity time limit for using the temporary banking card data, a maximum amount of a transaction to be debited from the user banking account number and/or a corresponding currency.

The phone microprocessor processes data originating from the phone memory and/or an external entity(ies), like the card 14 and/or the server 18.

The phone microprocessor executes preferably the Web browser, as user interface, so as to interact with the first target application supported by the phone 12, an application(s), as a second target application(s), supported by the server 18 and preferably an application(s), as a third target application, supported by the card 14 and offered to the card user.

The phone microprocessor executes preferably security functions, in order to protect access to user information managed through or by the phone 12.

The security functions may include a phone authentication process. The phone authentication process uses preferentially an authentication data generation algorithm, like an OTP generation algorithm, such as an EMV CAP OTP, to generate data for authenticating the phone 12, like a password. Such a password may be usable only once, as OTP.

The security functions may include a user authentication process. The user authentication process may be used before reading data, such as notably a banking account number, stored within the phone 12 or another entity connected to it.

The security functions may include an encryption/decryption process to be used before sending to/ after receiving from the server 18 data, so as to protect access to data thus exchanged between the phone 12 and the server 18.

The phone 12, as mobile handset, plays, among others, a role of a trusted device and a wireless (or contact-less) modem, so as to exchange data with the remote server 18.

Thus, no other particular terminal, like a PC, is mandatory to get temporary banking card data.

The phone 12 is equipped with an antenna 122 for exchanging data, through a long range radio-frequency link(s) 15, via a mobile radio-communication network 16, with the server 18.

The mobile radio-communication network 16 may be constituted by a Global Service for Mobiles (or GSM), a General Packet Radio Servce (or GPRS), a Universal Mobile Telecommunications System (or UMTS), a Code Division Multiple Access (or CDMA) and/or a Long Term Evolution (or LTE) type network(s).

The mobile radio-communication network list is not exhaustive but only for exemplifying purposes.

Instead of a mobile radio-communication network(s), it may be constituted by an Internet network accessible, via a contact-less link, like a Wifi or Bluetooth one, through an intermediate entity as an Internet access point.

The phone 12 is connected, through a bi-directional link(s) 13, to the card 14.

The phone I/O interface includes an interface, so as to exchange data with the card 14.

The phone I/O interface with the card 14 may be an International Organization for Standardization (or ISO) 7816 interface, as a contact interface when the card 14 is inserted within the phone 12.

The phone I/O interface with the card 14 may be constituted by a contact-less interface. The phone 12 cooperates, for instance, over a short range radio-frequency link(s), with the card 14 while being relatively close to each other. The short range radio-frequency may be fixed at, for instance, 13,56 MHz relating to a Near Field Communication (or NFC) technology. Typically, the distance between the phone 12 and the card 14 is up to 20 cm.

The card 14 belongs to a user, namely the user of a banking account number to be associated with temporary banking card data to be obtained from the server 18.

The card 14 is a token.

For instance, instead of a smart card, the token may be a smart dongle of the USB (acronym for "Universal Serial Bus") type, or a chip to be fixed to a user terminal, as host device, possibly in a removable manner.

For instance, instead of a banking smart card, the token may be a Subscriber Identity Module (or SIM) type smart card, a (micro) Secure Digital (or SD) type card, a micro-SD type card or a Multi-Media type Card (or MMC) or any card of another format.

The card 14 constitutes preferably a "mother card" with a banking account number while a corresponding ecard with temporary banking card data is a (virtual) son card. Both the mother card and the son card are related to one and the same banking account number, the one of the card 14 user.

The card 14 comprises a chip.

The card 14 chip includes preferably at least one microprocessor 142, as data processing means, at least one memory 144 and at least one I/O interface 146 which are internally linked together through a data and control bus 143.

The card I/O interface 146 includes preferably an ISO 7816 interface, so as to let communicate, through the bi-directional link 13, the card 14 and the phone 12. The communication between the card 14 and the phone 12 is used in particular for benefitting from the MMI of the phone 12 and exchanging data, like a banking account number and/or other data stored within the card memory 144.

The card user has preferably subscribed to a service(s) managed by the server 18 and related to the first target application supported by the phone 12 in cooperation with the second target application supported by the server 18. As service(s), there is notably a service for being provided with temporary banking card data.

The card microprocessor 142 is able to initiate actions, in order to interact directly with the outside world, in an independent manner of the phone 12, as host device. Such a capacity of interaction at the initiative of the card 14 is also known as proactive capacity. The card 14 is thus enable to send, at its own initiative, to the phone 12 a proactive command, also known as "Display text", for displaying, through the phone display screen 126, a message, and/or another command for requesting a user to enter, through the phone 12 MMI, a Personal Identity Number (or PIN) and/or biometric data, as user authentication data.

The card microprocessor 142 executes preferably security functions, in order to protect access to user information stored and managed through or by the card 14.

The security functions include preferably a user authentication process. The user authentication process may be used before reading data stored within the card memory 144. To authenticate the user, the card 14 may store an application for verifying user authentication data stored securely within the card memory 144 and to be input by the card user. Thus, the card 14 compares user input with the stored user authentication data and authorize, when successful, a further prosecution, like a running of the first target application supported by the phone 12.

The security functions include preferentially an encryption/decryption process to be used before sending data to outside/after receiving data from outside, so as to protect access to data managed by the card 14. To encrypt data to be sent, the card 14 uses a key that is stored within the card memory 144 and an encryption algorithm, such as an Advanced Encryption Standard (or AES), a Data Encryption Standard (or DES) or the like. To decrypt data to be received, the card 14 uses a key that is stored within the card memory 144 and a decryption algorithm, such as an AES, a DES or the like.

Preferably, the card 14 stores securely, within its memory 144, data for identifying the chip, such as an International Mobile Subscriber Identity (or IMSI) and/or an Integrated Circuit Card Identifier (or ICCID), as a unique number associated with all mobile radio-communication network(s) that may be used.

The IMSI is used for identifying a subscriber in relation to one or several mobile radio-communication networks.

The card memory 144 may store one or several SIM type applications like, for instance, a SIM for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks, and/or an Internet protocol multimedia Services Identity Module (or ISIM) for IP Multimedia Subsystem (or IMS).

The card memory 144 stores data relating to the concerned user, as personal user data. The user data may include a banking account number, a first name, a last name, a birth date, a private key, a PIN, biometric data (like a fingerprint(s), a facial print(s) and/or a iris print(s)) and/or other appropriate.

The card memory 144 stores preferably a PIN(s) and/or biometric data, as user authentication data, to be matched with user input.

The card memory 144 may store data, such as a password, relating to an authentication of the card.

The card memory 144 stores preferably a third target application algorithm relating to a process for verifying user authentication data.

The user may access such a third target application and triggers automatically its execution thanks to a corresponding command that originates from the phone 12 that stores it.

The command may be constituted by a Sim Application ToolKit (or STK) like command.

The third target application is offered to the card 14 user.

The card memory 144 may store a server identifier, like a URI or URL, so as to address the server 18.

The server 18 to be addressed is identified within either data retrieved from the phone 12 or data stored within the card memory 144.

Alternately, the phone user may be requested to enter, through the phone 12 MMI, a server identifier.

The server 18, as addressee of a request for sending temporary banking card data, may be identified by a URI or URL, as server identifier.

The server 18 is accessible through at least the mobile radio-communication network 16 (and/or an Internet network).

The server 18 plays a role of a provider of temporary banking card data under the server 18 control, notably after a card authentication, a phone authentication and/or a user authentication.

The server 18 is hosted by a computer including data processing means.

The server 18 is dedicated to running an application for managing a database relating to at least one banking service and communicating some information included within the database to outside.

The database is also termed back-end database.

The server 18 accesses a memory (not represented) termed server memory that stores the database.

The server 18 may contain or be connected to the server memory.

The server memory stores preferably a temporary banking card data generation algorithm that allows generating temporary banking card data.

The database registers a plurality of user accounts, each user account being associated with at least one identifier relating to a device, like a phone identifier, and other corresponding device data, at least authentication data relating to an involved device(s), like a password and/or an OTP, and possibly user account data.

For a user account, several devices, like a phone and a card associated with the phone, with other related data may be registered within the database.

The server data processing means executes preferably security functions, in order to protect access to information managed through or by the server 18.

The security functions include preferentially an encryption/decryption process to be used before sending data to outside/after receiving data from outside, so as to protect access to data managed through or by the server 18. To encrypt data to be sent, the server 18 uses a key that is stored within the server memory and an encryption algorithm, such as an AES, a DES or the like. To decrypt data to be received, the server 18 uses a key that is stored within the server memory and a decryption algorithm, such as an AES, a DES or the like.

The database may associate, for each user account, a banking account number with temporary banking card data, like an ecard number, and other related data. As related data, it may be a maximum amount value that is allowed to be debited from the banking account number, a currency type, like US dollar or Euro, a validity time limit, a trigram and/or other data associated with a use of the ecard, as temporary banking card data.

The server 18 may have generated, for each banking account number, temporary banking card data, either before any connection of a device registered for the concerned user or just after the server 18 authorizes to issue temporary banking card data.

Alternately, another server (not represented) or another entity connected to the server 18 generates temporary banking card data only when the server 18 authorizes to issue temporary banking card data and requests this latter to the connected entity. Then, the connected entity sends to the server 18 the generated temporary banking card data.

The database may associate, for each user account, at least one public or shared key relating to each device, like at least the phone 12, registered for the concerned user. For instance, one public key relating to the phone 12 is to be used, by the server 18, for encrypting data to be sent to the phone 12, so as to protect data thus transmitted.

The server memory stores preferably a private key and a corresponding public key to be used, by any device, like the phone 12, for encrypting data to be sent to the server 18 and all other devices associated with the other user accounts managed by the server 18.

Alternatively, the server memory stores a shared key to be used, by any device, like the phone 12, and the server 18 for encrypting data to be sent to the server 18 and to the device respectively and all other devices associated with the other user accounts managed by the server 18.

The server memory stores preferably rules for accessing the service managed by the server 18.

The rules for accessing the service may encompass, for each user account, a user profile(s) that is(are) eligible for accessing the service, a predetermined minimum amount of the banking account number, a predefined minimum age and/or other kind of access condition(s).

The rules for accessing the service are taken into account so as to forbid or authorize access to the concerned service.

The server 18 may be operated by either a bank operator or on its behalf, a mobile radio-communication network operator and/or a service provider.

The server 18 is arranged to check whether data received from a device(s) connected to the server 18 does or does not match expected data for authenticating the device(s).

The server 18 uses the same authentication data generation algorithm than the phone 12 or is informed about data for authenticating the device(s) used by the card user and/or the phone user.

The server 18 may be able to analyze, when the server 18 has authenticated an involved registered device(s), whether the corresponding identified banking account number does or does not allow the requesting device(s) to access the managed service.

Figure 2 shows an example of a message flow 20 that involves notably the phone 12, as requesting device, the card 14 and the server 18.

In the explained example, the card user, as also phone user, desires to obtain data relating to an ecard, as temporary banking card data. To obtain the ecard data, a first target application supported by the phone 12, a second target application supported by the server 18 and a third target application supported by the card 14 cooperate together in the manner that is described herein after.

It is assumed that the card 14 is inserted within a card reader equipping the phone 12 and the card 14 is used for authenticating the card user.

It is assumed that the phone display screen 126 displays a list of application(s) offered from and through the phone 12.

Firstly, the phone user selects, through the phone 12 MMI, the first target application, so as to receive ecard data.

The phone 12 triggers an execution of the selected first target application.

The phone 12 sends, through a long range radiofrequency link, to the server 18 a message 22, such as one Short Message Service (or SMS) message, one Multimedia Message Service (or MMS) message and/or an email, that comprises data relating to an identification of the phone 12, like an IMEI.

The server 18, as addressee of the message 22, is identified by an address stored within the phone memory, the card memory or an entry of the card user through the phone MMI.

Optionally, before sending the message 22, the phone 12 encrypts the phone identification data by using either a public key relating to the server 18 or a shared key stored within either the phone memory or the card memory 144 and at the server side.

The server 18 launches an execution of the second target application.

Optionally, the server 18 carries out a data decryption on the encrypted phone identification data by using a private key relating to the server 18 or the shared key stored within either the phone memory or the card memory 144 and the server memory.

Once the server 18 has received a phone identifier originating from the phone 12 and therefore identified the phone 12, the server 18 retrieves preferably a banking account number associated with the phone identifier registered within the server memory read by the server 18.

The banking account number is thus not exchanged between the phone 12 and the server 18. The banking account number is prevented from being used in a fraudulent manner.

Alternately, instead of reading a server memory to identify the banking account number, the phone 12, after having read a memory of either a card inserted within a card reader equipping the phone 12 or the phone 12, sends to the server 18 the read banking account number accompanying possibly the phone identifier.

The server 18 sends to the identified phone 12 a message 24 comprising either a request for authenticating the phone 12 or a command for triggering, at the phone 12, a generation of data for authenticating the phone 12 and a sending back to the server 18 of the generated phone authentication data.

Such a message 24 may comprise a request for authenticating the card 14.

Such a message 24 also comprises preferentially a request for authenticating a card user.

Then, the phone 12 sends to the card 14 a message 26 comprising a command for authenticating a card user. The card 14 launches an execution of the third target application.

The card 14 sends preferably to the phone 12 a command 28 for displaying an attached message that is to be displayed at the phone display screen 126 and used for prompting a card user to enter her/his PIN and/or biometric data, as user authentication data. Then, the card user submits, through the phone MMI, her/his authentication data. Once the phone 12 has collected all the submitted or received user authentication data, the phone 12 sends to the card 14 a message 210 encompassing the received user authentication data.

The card 14 verifies whether the received user authentication data includes expected user authentication data that is stored within the card memory 144. If the received user authentication data does not match the expected one, then the card 14 sends to the phone 12 a message for informing about a user authentication failure. Then, the phone 12 forbids to continue an execution of the first application while aborting a process of being provided with ecard data. Otherwise, i.e. when the received user authentication data matches the expected one, the card 14 sends to the phone 12 a message 212 for informing about a user authentication success.

The card 14 may generate card authentication data and send it to the phone 12.

Then, the phone 12 authorizes to continue an execution of the first application while generating preferably an OTP (and/or a password), as phone authentication data.

Once the phone 12 has generated an OTP (and/or a password), the phone 12 sends, through a long range radiofrequency link, to the server 18 a message 214, such as one SMS message, one MMS message and/or an email, that comprises the generated phone authentication data and possibly card authentication data.

Optionally, before sending the last message 214, the phone 12 encrypts the phone authentication data and possibly card authentication data by using either a public key relating to the server 18 or a shared key stored within either the phone memory or the card memory 144 and the server memory.

Optionally, the server 18 carries out a data decryption by using a private key relating to the server 18 or the shared key stored within either the phone memory or the card memory 144 and at the server side.

The server 18 verifies whether received data, as authentication data relating to involved device(s), like the phone 12 and possibly the card 14, includes expected authentication data relating to the device(s) that is(are) involved at the user side. To do it, the server 18 generates or lets another entity (connected to the server 18) generate expected authentication data relating to the involved device(s) while using one and the same device authentication data generation algorithm than the one used at the phone 12 side, as requesting device(s).

If the received data is not the expected device authentication data, then the server 18 does not send to the requesting phone 12 any ecard data. Otherwise, i.e. when the received data is the expected phone authentication data and possibly expected card authentication data, the server 18 may send to the phone 12 a request 216 for receiving transaction data, as further data related to the ecard. Such data may include transaction details relating to the ecard, such as its validity time limit, a maximum amount of a transaction to be debited from the user banking account number, a corresponding currency and/or other data. The phone 12 collects all data relating to the ecard that is stored within the phone memory, the card memory 144 and/or requested, through the phone MMI, to the user. Then, the phone 12 sends to the server 18 all requested transaction data 218.

When the received data is the expected phone authentication data and possibly expected card authentication data, the server 18 generates or lets another entity (connected to the server 18) generate data relating to the ecard.

The ecard data includes at least an ecard number.

In the end, the server 18 sends to the phone 12 a message(s) 220, such as one or several SMS messages, that comprise(s) generated data relating to the ecard.

Optionally, before sending the last message 220, the server 18 encrypts the ecard data by using either a public key relating to the authenticated phone 12 or a shared key stored within either the phone memory or the card memory 144 and the server memory. Optionally, the phone 12 (or the card 14) carries out a data decryption on the encrypted ecard data by using a private key relating to the phone 12 (or the card 14) or the shared key stored within either the phone memory or the card memory 144 and at the server side.

Once clear ecard data is obtained, the phone 12 presents it to the phone user by displaying it for instance at the phone display screen 126.

The invention solution is secure since at least the phone is authenticated and the data exchange between the phone 12 and the server is preferably secured. Moreover, the invention solution is user friendly since the process does not need to involve the user except for a possible user authentication.

## Claims

1. A method (20) for providing temporary banking card data, **characterized in that**, a portable device (12) including a display screen (126) and including or being connected to wireless communication means, the method comprises the following steps:
- the device sends, through a long range radiofrequency link (15), to a remote server (18) a device identifier (22) and data (214);
- the server verifies whether received data includes expected device authentication data;
- if the received data is expected device authentication data, then the server generates temporary banking card data; and
- the server sends to the device the temporary banking card data (220).

2. Method according to claim 1, wherein, the server accessing a memory storing a banking account number associated with the device identifier, the server identifies the banking account number.

3. Method according to claim 1, wherein, the device comprising a card reader, the device reads from a card (14) inserted within the card reader a banking account number, the device sends to the server the read banking account number.

4. Method according to any of claims 1 to 3, wherein the device sends to the server a generated one time password and/or a password.

5. Method according to any of claims 1 to 4, wherein, prior to a sending of the temporary banking card data to the device, the server sends to the device a request (24) for authenticating the device.

6. Method according to any of claims 1 to 5, wherein, prior to a sending of data to the server, the method further includes at least one user authentication step.

7. Method according to claim 3 or 6 depending on claim 3, wherein the card carries out one user authentication step, the banking card storing user authentication data.

8. Method according to any of claims 1 to 7, wherein, prior to a sending of temporary banking card data to the device, the method further comprises the following steps:
- the server sends to the device a request (216) for receiving transaction data;
- the device sends to the server transaction data (218).

9. Method according to any of claims 1 to 8, wherein the device stores a first key that is used for encrypting data to be sent to the server and the server stores a second key that is used for encrypting data to be sent to the device.

10. A system for providing temporary banking card data,
**characterized in that** the system comprises a portable device (12) and a remote server (18), the portable device including a display screen (126) and including or being connected to wireless communication means,
**in that** the device is adapted to send, through a long range radiofrequency link (15), to the server, a device identifier (22) and data (214); and
**in that** the server is adapted to verify whether received data includes expected device authentication data, generate temporary banking card data if the received data is expected device authentication data and send to the device the temporary banking card data (220).
